# EUROPEAN PATENT SPECIFICATION

(11) **EP 1 864 216 B1**
(45) Date of publication and mention of the grant of the patent: **11.02.2009**
(21) Application number: 06739480.9
(22) Date of filing: 22.03.2006
(51) Int. Cl.: G06F 11/00, G06F 9/46

(54) **SYSTEM FOR DYNAMICALLY OPTIMIZING PERFORMANCE AND RELIABILITY OF REDUNDANT PROCESSING SYSTEMS**
SYSTEM ZUR DYNAMISCHEN OPTIMIERUNG DER LEISTUNG UND ZUVERLÄSSIGKEIT REDUNDANTER VERARBEITUNGSSYSTEME
SYSTEME D'OPTIMISATION DYNAMIQUE DES PERFORMANCES ET DE LA FIABILITE DE SYSTEMES DE TRAITEMENT REDONDANTS

(30) Priority: 01.04.2005 US 96872
(43) Date of publication of application: 12.12.2007
(73) Proprietor: Honeywell International Inc., Morristown NJ 07960 (US)
(72) Inventor: WOLFE, Jeffrey, M., Parrish, FL 34219 (US); RAMOS, Jeremy, Clearwater, FL 33764 (US); COPENHAVER, Jason, L., Sarasota, FL 34232 (US)
(74) Representative: Buckley, Guy Julian
(86) International application number: PCT/US2006/010718
(87) International publication number: WO 2006/107612

(56) References cited:
- US-A- 3 783 250
- US-A1- 2003 120 914
- US-A1- 2003 135 609
- US-B1- 6 615 366

## Description

### FIELD OF THE INVENTION

The present invention relates generally to the computer processing field, and more specifically, but not exclusively, to a system for dynamically optimizing the performance and reliability of redundant processing systems that can be used, for example, in space applications.

### BACKGROUND OF THE INVENTION

In space applications, there is a significant need for smaller and lighter, lower power consuming, high performance systems with increased reliability and higher processing speeds. In order to be cost-effective, these systems are typically designed to minimize their size and weight, because size and weight are typically the overriding "costs" in space missions. Nevertheless, in space applications, mission-critical components of systems are duplicated in order to increase their reliability and tolerance to faults. For example, multiple processors operating as a redundant set are designed to receive the same input data, perform the same mission-critical computations, and transmit the same output commands. However, in addition to the need for increased reliability and tolerance to faults for systems operating in space, there is also a significant need for increased throughput or processing speed. However, the processing speeds of the hardware on existing space systems are relatively slow, and (due partly to their need for redundancy and fault tolerance) these systems are relatively expensive. Therefore, there is a significant need for a technique that can optimize the performance and reliability of redundant processing systems, which can be used, for example, in space applications without incurring significant additional costs. As described in detail below, the present invention provides such a technique, with a system and method that dynamically optimizes performance and reliability in redundant processing systems.

US-A-3 783 250 discloses an adaptive voting computer system that uses adaptive voting to tolerate failures. Each of four computers is individually connected to one of four external input/output (I/O) busses which interface with external subsystems. Each computer is connected to receive input data and commands from the other three computers and to furnish output data and commands to the other three computers.

US-A-6 615 366 discloses a processor is provided having dual execution cores that may be switched between high reliability and high performance execution modes dynamically, according to the type of code segment to be executed.

### SUMMARY OF THE INVENTION

The present invention provides an improved system for dynamically optimizing the performance and reliability of redundant processing systems (e.g., for use in space applications) as set forth in claim 1 and to a programmable logic device as claimed in claim 8. In accordance with a preferred embodiment of the present invention, a Field Programmable Gate Array (FPGA) is provided that includes a plurality of processors. Based on mission specific modes or environmental conditions, the processing system can dynamically and safely transition between the high performance of, for example, a general purpose, quad Symmetric Multiprocessor (SMP) and the high reliability of a redundant set of processors (e.g., Triple Modular Redundancy (TMR) system). This architecture allows the use of a single FPGA with multiple processors to take advantage of the maximum processing throughput available when sufficient mission conditions are met, and can also safely transition to a lower throughput, high reliability mode when needed. In other words, at particular points during a mission, high throughput or processing capacity can be obtained at the expense of reliability or dependability as the mission conditions allow. If the mission conditions can support a reduced level of dependability at a particular point in time, then the processors can be adapted to run in a single string (e.g., triple or quad string) to produce three to four times the processing capacity of the redundant set.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** depicts a block diagram of a system that can be used to implement a preferred embodiment of the present invention;
**Figure 2** depicts a block diagram of an example comparator unit, which can be used to implement comparator unit **104** in **Figure 1****;**
**Figure 3** depicts an example graphical representation of processing capacity versus dependability for a plurality of processors over time, which illustrates principles of the present invention; and
**Figure 4** depicts a flow chart of an example method that can be used to implement a preferred embodiment of the present invention.

### DETAILED DESCRIPTION OF PREFERRED EMBODIMENT

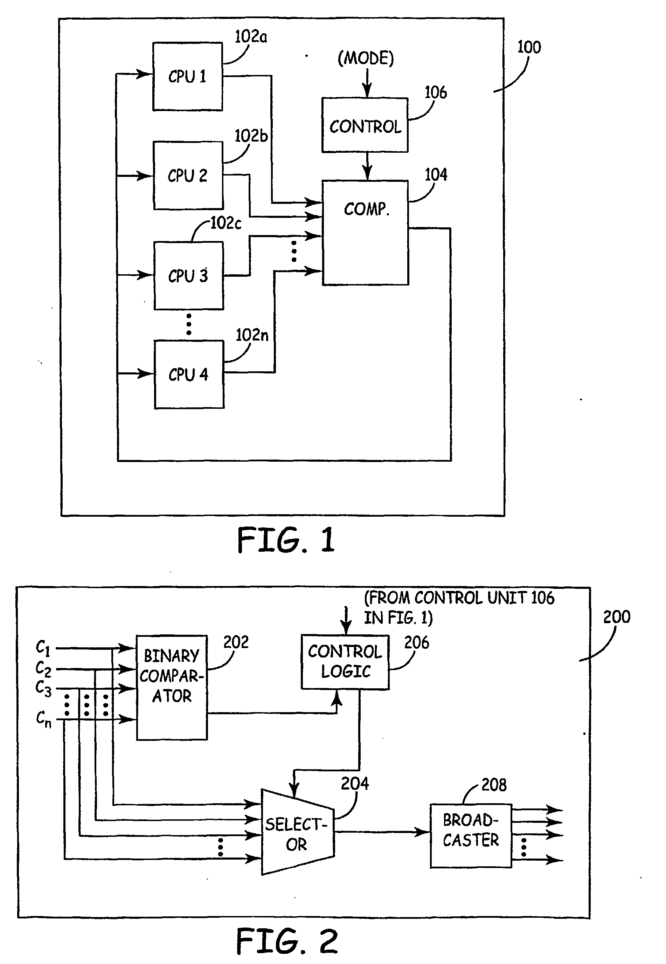

With reference now to the figures, **Figure 1** depicts a block diagram of a system 100 that can be used to implement a preferred embodiment of the present invention. In one embodiment, system **100** can be an electronic component in an Application Specific Integrated Circuit (ASIC). In another embodiment, system **100** can be an electronic component in a Printed Wire Assembly (PWA). For this exemplary embodiment, system **100** is preferably a logic device including at least one Field-Programmable Gate Array (FPGA). However, it should be understood that the present invention is not intended to be so limited, and can include, for example, any suitable system, circuit, integrated circuit, chip, electronic component, electronic module, etc., which includes a plurality of processing units in a redundant set and is capable of operating in a space mission or similar environment.

For this illustrative example, system **100** includes a plurality of processing units **102a, 102b, 102c, ...102n** (wherein the suffix "n" denotes the total number of processing units being used), a comparator unit **104,** and a control unit **106.** As such, although four processing units **102a-102n** are shown in this example, this particular number is for illustrative purposes only and any suitable number of processing units may be used in system **100.** However, if processing units **102a-102n** are intended for use in a redundant, fault tolerant architecture, then it is preferable that system **100** include at least three redundant processing units. For example, as disclosed in the above-described, related application entitled "REDUNDANT PROCESSING ARCHITECTURE FOR SINGLE FAULT TOLERANCE", the inclusion of a third processing unit provides a tie-breaking vote in determining a faulty processing unit. In any event, an example of a suitable logic device including a plurality of processors and a comparator, which can be used to implement at least a portion of system **100** arranged as a logic device including a plurality of processing units (e.g., processing units **102a-102n**) and a comparator unit (e.g., **104**), is the Virtex-II Pro^{®} FPGA manufactured by Xilinx, Inc. The Virtex-II Pro FPGA is a Programmable Logic Device (PLD), which can include up to four, on-chip 300-400 MHz, 420+ DMIPS IBM PowerPC^{®} 405 processors, with on-chip memory and programmable logic resources appropriately coupled to maximize performance.

Notably, instead of a single logic device including four processing units and a comparator unit, the present invention is not intended to be limited by such an architecture and can be arranged in a different embodiment as, for example, two logic devices that include two processors and one comparator in each. In such an arrangement, the two comparators can be combined to perform the comparison function in a distributed architecture. As such, in one embodiment, both comparators can perform substantially the same comparison function. In another embodiment, the two comparators can complement each other and together perform the one comparison function.

For this example embodiment, an output of each processing unit **102a-102n** is coupled to a respective input of comparator unit **104.** Also, an output of comparator unit **104** is coupled to an input of each processing unit **102a-102n.** For this example, comparator unit **104** is implemented advantageously as a hardware comparator, as opposed to being implemented in software (e.g., speed of hardware implementation is significantly faster than software implementation). Thus, comparator unit **104** can perform a comparison function with respect to the input data received from each processing unit **102a-102n,** and responsive to the results of comparison functions performed, comparator unit **104** can output one or more suitable signals to control an operation of each processing unit **102a-102n.** Additionally, however, comparator unit **104** can also output suitable signals to control the operation of each processing unit **102a-102n** responsive to one or more control signals received from an output of the control unit **106.**

**Figure 2** depicts a block diagram of an example comparator unit 200, which can be used to implement comparator unit **104** in **Figure 1**. For this example embodiment, comparator unit **200** includes a binary comparator **202,** a selector **204,** a control logic unit **206,** and a broadcaster **208.** A plurality of inputs C₁-Cₙ for binary comparator **202** are arranged to receive signals output from respective outputs of processing units (not shown), such as, for example, processing units **102a-102n** in **Figure 1**. Also, inputs C₁-Cₙ are coupled to respective inputs of selector **204.** An output of binary comparator **202** is coupled to control logic unit **206,** and an output of control logic unit **206** is coupled to a selection input of selector **204.** An output of selector **204** is coupled to an input of broadcaster **208.** Notably, for this example embodiment, a second input of control logic unit **206** is coupled to an output of an external control unit (e.g., control unit **106** in **Figure 1**).

In operation, for this example embodiment, each processing unit **102a-102n** in **Figure 1** generates a respective output signal C₁-Cₙ. The output signals C₁-Cₙ are received by binary comparator **202.** Binary comparator **202** can perform a bit-level comparison to detect any change in bit positions between processor outputs, in order to determine if there is a faulty or failed processor. The result of the bit comparison in binary comparator **202** is forwarded to control logic unit **206.** Control logic unit **206** generates a control signal based on the comparison results. The control signal from control logic unit **206** triggers selector **204.** In the event of a failed processor, a control signal from control logic unit **206** triggers selector **204** to choose an output other than the failed output to be sent to broadcaster **208.** Broadcaster **208** broadcasts the selected signal to all of the processing units (e.g., processing units **102a-102n**), and the failed processor can be reset in response.

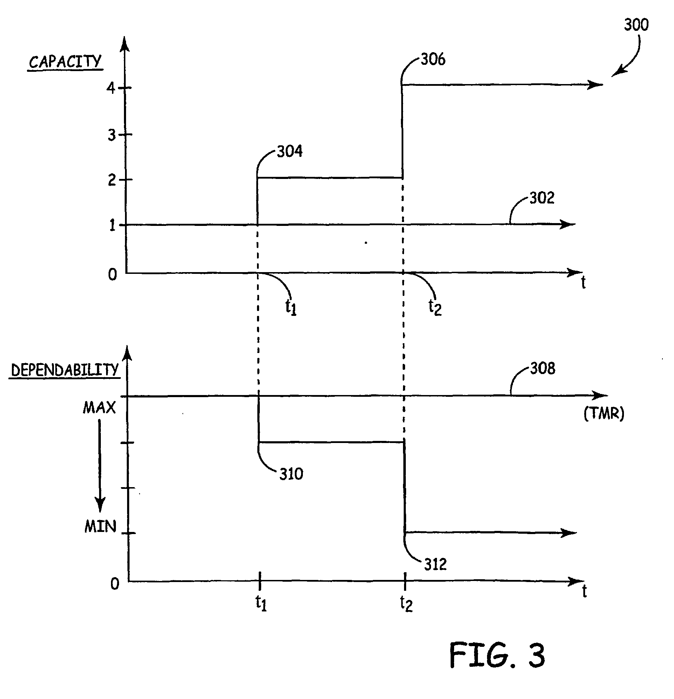

Notably, however, in accordance with the principles of the present invention, control logic unit **206** can also generate a control signal to trigger selector 204 to choose a suitable output for broadcaster **208,** which is responsive to an input signal received from the external control unit (e.g., control unit **106** in **Figure 1**). Broadcaster **208** can then broadcast the selected output signal to all of the processing units (e.g., processing units **102a-102n**) in order to configure the processing units according to mission needs. For illustrative purposes in this example, it can be assumed that processing units **102a-102n** in **Figure 1** are operating initially as a redundant set of four processors in order to achieve greater redundancy and higher fault tolerance. As such, for this example, the fully redundant set of processing units **102a-102n** can represent what is known as the "maximal solution" or standard ASIC TMR solution. Consequently, with the maximal or TMR solution, the processing capacity of the redundant set of processing units **102a-102n** can be associated with a particular level of dependability. In other words, with a fully redundant set of processors in the maximal or TMR solution, the processing capacity for the set remains constant throughout a mission. An example that illustrates this relationship between processing capacity and dependability is described below with respect to **Figure 3****.**

**Figure 3** depicts an example graphical representation **300** of processing capacity versus dependability for a plurality of processors over time, which illustrates principles of the present invention. For illustrative purposes in this example, it may be assumed that the overall time period, t, depicted in **Figure 3** represents the elapsed time of a space mission. Referring now to **Figures 1** and 3, it can be seen that a particular level of processing capacity (e.g., fully redundant set having capacity of 1 processor) **302** is constant over time, t, for a maximum level of dependability (e.g., the maximal or TMR solution) **308.** However, for this example, it may also be assumed that as the mission progresses in time, the mission conditions are such that a reduced level of processing dependability is acceptable at time, t₁. So, at time, t₁, control unit **106** in **Figure 1** (e.g., responsive to a mission system direction) can output a control signal (e.g., composed of four bits) to comparator **104,** which in turn, outputs suitable control signals (e.g., composed of four words, or one word for each processor involved) to processing units **102a-102n** to reconfigure to a reduced redundant set. For example, as indicated by the increased processor capacity level **304** at time, t₁, comparator **104** can direct the redundant set of three processing units (e.g., **102a-102c**) to be operated in a string with the fourth processing unit **(102n** in this example) to provide increased throughput, but the level of processing dependability at time, t₁, (e.g., indicated as **310**) is decreased. Similarly, depending on the mission requirements, if the mission continues and the conditions are such that an additional reduction in the level of dependability is acceptable, then control unit **106** can output a control signal to comparator **104,** which in turn, outputs suitable signals to processing units **102a-102n** to reconfigure, for this example, to a high performance, quad SMP configuration (e.g., string of four processing units) to produce a maximum level of processing capacity (and throughput), as indicated by the processing capacity level **306** at time, t₂. However, also at time, t₂, the quad SMP configuration of processing units **102a-102n** provides a minimum possible level of dependability, as indicated by the decreased dependability level **312.**

As such, **Figure 3** illustrates that mission conditions at particular times may be acceptable for different processing unit configurations, in order to dynamically optimize the processing capacity and dependability of system **100.** For example, mission conditions may be acceptable for decreasing or increasing processing system dependability by transitioning safely and smoothly between different processor configurations, such as, for example, a quad string processor configuration, a triple redundant plus one processor configuration, a dual redundant plus two processors configuration, two dual redundant processors configuration, and a fully redundant maximal or TMR solution configuration. Notably, although processor configuration can be used for dynamically optimizing system capacity and dependability, the present invention is not intended to be so limited and can also include the reconfiguration of one or more processing units on a task basis.

For example, a particular software task in a mission application may not require maximum dependability, so control unit **106** can be directed to output suitable control signals (e.g., via comparator **104**) to reconfigure processing units **102a-102n** responsive to the reduced need for dependability (e.g., to increase throughput for this task). Thus, in accordance with the principles of the present invention, system **100** can dynamically reconfigure the redundant set of processing units **102a-102n** in order to optimize the dependability or reliability and capacity and throughput of the processing units responsive to changing mission conditions, with a relatively small and readily configurable logic device.

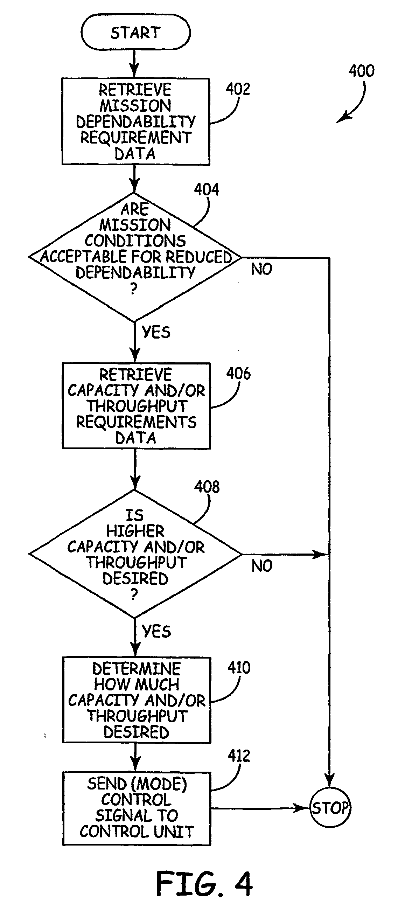

**Figure 4** depicts a flow chart of an example method **400** that can be used to implement a preferred embodiment of the present invention. For this example embodiment, a processor (not explicitly shown) associated with, or included in, a control unit (e.g., control unit **106** in **Figure 1**) can be responsible for monitoring performance related conditions throughout a mission (e.g., onboard or external processor for a space mission). For this example, as the mission progresses, this mission processor retrieves dependability requirements for the mission applications (or mission processor tasks) to be run during a predetermined time period (step **402**). The mission processor (or control unit, itself) then determines whether or not the mission conditions (e.g., dependability requirements) are such that a reduced level of dependability may be acceptable for the predetermined time period (step **404**). For example, it may be assumed that initially processing units **102a-102n** are being operated in a fully redundant mode (e.g., to obtain the maximal or TMR solution system) for maximum potential dependability and increased fault tolerance. If the projected mission conditions are not deemed acceptable to allow reduced dependability for the predetermined time period, then the flow is stopped.

If (at step **404**), however, the mission processor (or the control unit) determines that the projected mission conditions for the predetermined time period are such that a reduced level of processor dependability is acceptable, then the mission processor retrieves capacity and/or throughput requirements for the mission application(s) and/or processing tasks that are to be (or are being) run during the predetermined time period (step **406**). The mission processor (or control unit) then determines whether or not additional processor capacity and/or throughput are desired for the predetermined time period (step **408**). If not, then the flow is stopped.

If (at step **408**), however, the mission processor (or the control unit) determines that additional processor capacity and/or throughput are desired for the predetermined time period, then the mission processor (or the control unit) determines what amount of additional capacity and/or throughput are desired (step **410**). The mission processor (or the control unit, itself) then generates a (mode) control signal that includes appropriate control data for reconfiguring the arrangement of the processing units involved (e.g., processing units **102a-102n**), in order to attain the desired increase in processing capacity and/or throughput desired (e.g., or at least as much additional processing capacity and/or throughput possible). The (mode) control signal is then sent to the (mode) control unit (e.g., control unit **106)** or, in the embodiment illustrated by **Figures 1** and **2****,** to the selector **204** for implementation (step **412).** For example, the (mode) control signal may cause selector **204** to configure processing units 102a-102n as a triple or quad (SMP) string of processing units, in order to achieve up to 3 or 4 times the processing capacity and/or throughput of the redundant set. The flow can then be stopped.

It is important to note that while the present invention has been described in the context of a fully functioning processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular processing system.

The description of the present invention has been presented for purposes of illustration and description, and is not intended to be exhaustive or limited to the invention in the form disclosed. Many modifications and variations will be apparent to those of ordinary skill in the art. These embodiments were chosen and described in order to best explain the principles of the invention, the practical application, and to enable others of ordinary skill in the art to understand the invention for various embodiments with various modifications that fall under the scope of the appended claims as are suited to the particular use contemplated.

## Claims

1. A system (100), comprising:
a plurality of processing units (102a-102n);
at least one comparator unit (104) coupled to said plurality of processing units (102a-102n); and
a control unit (106) coupled to said at least one comparator unit (104), said at least one comparator unit (104) adapted to vary a processing capacity level associated with said plurality of processing units (102a-102n) based at least in part on a signal from the control unit and a comparison of outputs of the plurality of processing units;
**characterised in that** the control unit (106) is responsible for monitoring performance related conditions throughout a mission, and the signal from the control unit (106) is dependent upon dependability requirements, whereby the control unit (106) can optimize dependability or throughput requirements in response to changing mission conditions.

2. The system (100) of Claim 1, wherein said plurality of processing units (102a-102n) are programmable processing units.

3. The system (100) of Claim 1, wherein said at least one comparator unit (104) is programmable.

4. The system (100) of Claim 1, wherein said plurality of processing units (102a-102n) are arranged in a Field-Programmable Gate Array.

5. The system (100) of Claim 1, wherein said plurality of processing units (102a-102n), said at least one comparator unit (104), and said control unit (106) are arranged in a Field-Programmable Gate Array.

6. The system (100) of Claim 1, wherein said plurality of processing units (102a-102n) and said at least one comparator unit (104) are arranged in an Application-Specific Integrated Circuit.

7. The system (100) of Claim 1, wherein said plurality of processing units (102a-102n) includes at least two processing units (102a, 102n) arranged as a redundant set.

8. A programmable logic device (100), comprising:
at least two processors (102a-102n), each processor of said at least two processors (102a-102n) adapted to perform substantially the same function; and
a control unit (106) coupled to said at least two processors (102a-102n), wherein said control unit (106) is adapted to program said at least two processors (102a-102n) such that said at least two processors (102a-102n) are arranged in at least one of a string configuration or a redundant configuration based at least in part on a comparison of outputs of the at least two processors
**characterised in that** the control unit (106) is responsible for monitoring performance related conditions throughout a mission, and a signal from the control unit (106) is dependent upon dependability requirements, whereby the control unit (106) can optimize dependability or throughput requirements in response to changing mission conditions.

9. The programmable logic device (100) of Claim 8, wherein the programmable logic device (100) comprises a Field-Programmable Gate Array.

10. The programmable logic device (100) of Claim 8, wherein the programmable logic device (100) comprises an integrated circuit.

## Patentansprüche

1. System (100), umfassend:
mehrere Verarbeitungseinheiten (102a-102n);
mindestens eine mit den mehreren Verarbeitungseinheiten (102a-102n) gekoppelte Komparatoreinheit (104); und
eine mit der mindestens einen Komparatoreinheit (104) gekoppelte Steuereinheit (106), wobei die mindestens eine Komparatoreinheit (104) dafür ausgelegt ist, ein mit den mehreren Verarbeitungseinheiten (102a-102n) assoziiertes Verarbeitungskapazitätsniveau mindestens teilweise auf der Basis eines Signals von der Steuereinheit und eines Vergleichs von Ergebnissen der mehreren Verarbeitungseinheiten zu variieren;
**dadurch gekennzeichnet, daß** die Steuereinheit (106) für die Überwachung von leistungsfähigkeitsbezogenen Bedingungen während einer Mission verantwortlich ist und das Signal von der Steuereinheit (106) von Verläßlichkeitsanforderungen abhängt, wobei die Steuereinheit (106) Verläßlichkeits- oder Durchsatzanforderungen als Reaktion auf sich ändernde Missionsbedingungen optimieren kann.

2. System (100) nach Anspruch 1, wobei die mehreren Verarbeitungseinheiten (102a-102n) programmierbare Verarbeitungseinheiten sind.

3. System (100) nach Anspruch 1, wobei die mindestens eine Komparatoreinheit (104) programmierbar ist.

4. System (100) nach Anspruch 1, wobei die mehreren Verarbeitungseinheiten (102a-102n) in einem FPGA (Field-Programmable Gate Array) angeordnet sind.

5. System (100) nach Anspruch 1, wobei die mehreren Verarbeitungseinheiten (102a-102n), die mindestens eine Komparatoreinheit (104) und die Steuereinheit (106) in einem FPGA angeordnet sind.

6. System (100) nach Anspruch 1, wobei die mehreren Verarbeitungseinheiten (102a-102n) und die mindestens eine Komparatoreinheit (104) in einer anwendungsspezifischen integrierten Schaltung angeordnet sind.

7. System (100) nach Anspruch 1, wobei die mehreren Verarbeitungseinheiten (102a-102n) mindestens zwei als redundanter Satz angeordnete Verarbeitungseinheiten (102a, 102n) umfassen.

8. Programmierbare Logikanordnung (100), umfassend:
mindestens zwei Prozessoren (102a-102n), wobei jeder Prozessor der mindestens zwei Prozessoren (102a-102n) dafür ausgelegt ist, im wesentlichen dieselbe Funktion auszuführen; und
eine mit den mindestens zwei Prozessoren (102a-102n) gekoppelte Steuereinheit (106), wobei die Steuereinheit (106) dafür ausgelegt ist, die mindestens zwei Prozessoren (102a-102n) so zu programmieren, daß die mindestens zwei Prozessoren (102a-102n) mindestens teilweise auf der Basis eines Vergleichs von Ausgaben der mindestens zwei Prozessoren in einer String-Konfiguration und/oder einer redundanten Konfiguration angeordnet werden,
**dadurch gekennzeichnet, daß** die Steuereinheit (106) für die Überwachung von leistungsfähigkeitsbezogenen Bedingungen während des Verlaufs einer Mission verantwortlich ist und ein Signal aus der Steuereinheit (106) von Verläßlichkeitsanforderungen abhängt, wobei die Steuereinheit (106) Verläßlichkeits- oder Durchsatzanforderungen als Reaktion auf sich ändernde Missionsbedingungen optimieren kann.

9. Programmierbare Logikanordnung (100) nach Anspruch 8, wobei die programmierbare Logikanordnung (100) ein FPGA umfaßt.

10. Programmierbare Logikanordnung (100) nach Anspruch 8, wobei die programmierbare Logikanordnung (100) eine integrierte Schaltung umfaßt.

## Revendications

1. Système (100), comprenant :
une pluralité d'unités de traitement (102a-102n) ;
au moins une unité comparateur (104) couplée à ladite pluralité d'unités de traitement (102a-102n) ; et
une unité de commande (106) couplée à ladite au moins une unité comparateur (104), ladite au moins une unité comparateur (104) étant adaptée de façon à varier un niveau de capacité de traitement associé à ladite pluralité d'unités de traitement (102a-102n) en se basant au moins en partie sur un signal provenant de l'unité de commande et sur une comparaison des sorties de la pluralité d'unités de traitement ;
**caractérisé en ce que** l'unité de commande (106) est responsable de surveiller les conditions associées à la performance pendant toute une mission, et le signal provenant de l'unité de commande (106) est dépendant des exigences de fiabilité, ce qui fait que l'unité de commande (106) peut optimiser les exigences de fiabilité ou de débit en réponse aux conditions de mission changeantes.

2. Système (100) selon la revendication 1, dans lequel ladite pluralité d'unités de traitement (102a-102n) sont des unités de traitement programmables.

3. Système (100) selon la revendication 1, dans lequel au moins une unité comparateur (104) est programmable.

4. Système (100) selon la revendication 1, dans lequel ladite pluralité d'unités de traitement (102a-102n) sont disposées dans un réseau prédiffusé programmable par l'utilisateur.

5. Système (100) selon la revendication 1, dans lequel ladite pluralité d'unités de traitement (102a-102n), ladite au moins une unité comparateur (104) et ladite unité de commande (106) sont disposées dans un réseau prédiffusé programmable par l'utilisateur.

6. Système (100) selon la revendication 1, dans lequel ladite pluralité d'unités de traitement (102a-102n) et ladite au moins une unité comparateur (104) sont disposées dans un circuit intégré à application spécifique.

7. Système (100) selon la revendication 1, dans lequel ladite pluralité d'unités de traitement (102a-102n) comprend au moins deux unités de traitement (102a-102n) disposées dans un ensemble redondant.

8. Dispositif logique programmable (100), comprenant :
au moins deux processeurs (102a-102n), chaque processeur desdits au moins deux processeurs (102a-102n) étant adapté de façon à remplir essentiellement la même fonction ; et
une unité de commande (106) couplée auxdits au moins deux processeurs (102a-102n), ladite unité de commande (106) étant adaptée de façon à programmer lesdits au moins deux processeurs (102a-102n) de façon à ce que lesdits au moins deux processeurs (102a-102n) soient disposés dans au moins soit une configuration de chaîne, soit une configuration redondante basée au moins en partie sur une comparaison de sorties des au moins deux processeurs
**caractérisé en ce que** l'unité de commande (106) est responsable de surveiller les conditions associées à la performance pendant toute une mission, et un signal provenant de l'unité de commande (106) est dépendant des exigences de fiabilité, comme quoi l'unité de commande (106) peut optimiser les exigences de fiabilité ou de débit en réponse aux conditions de mission changeantes.

9. Dispositif logique programmable (100) selon la revendication 8, ce dispositif logique programmable (100) comprenant un réseau prédiffusé programmable par l'utilisateur.

10. Dispositif logique programmable (100) selon la revendication 8, ce dispositif logique programmable (100) comprenant un circuit intégré.
